# EUROPEAN PATENT SPECIFICATION

(11) **EP 3 893 593 B1**
(45) Date of publication and mention of the grant of the patent: **25.10.2023**
(21) Application number: 19880275.3
(22) Date of filing: 31.10.2019
(51) Int. Cl.: H04L 5/00, H04W 76/28, H04W 52/02, H04W 76/15, H04W 72/0453

(54) **RADIO COMMUNICATION METHOD AND TERMINAL DEVICE**
FUNKKOMMUNIKATIONSVERFAHREN UND ENDGERÄT
PROCÉDÉ DE COMMUNICATION RADIO ET DISPOSITIF TERMINAL

(30) Priority: 31.10.2018 CN 201811285527
(43) Date of publication of application: 13.10.2021
(73) Proprietor: Huawei Technologies Co., Ltd., Shenzhen, Guangdong 518129 (CN)
(72) Inventor: LI, Xiaocui, Shenzhen, Guangdong 518129 (CN); KUANG, Yiru, Shenzhen, Guangdong 518129 (CN)
(74) Representative: Körber, Martin Hans
(86) International application number: PCT/CN2019/114842
(87) International publication number: WO 2020/088612

(56) References cited:
- EP-A1- 2 469 939
- WO-A1-2018/089730

## Description

### TECHNICAL FIELD

This application relates to the field of communications technologies, and in particular, to a wireless communication method, a terminal device, and a computer-readable storage medium.

### BACKGROUND

In a long term evolution (long term evolution, LTE) system, when a terminal device is in a radio resource control (radio resource control, RRC) connected mode, a discontinuous reception (discontinuous reception, DRX) function may be used, to reduce power consumption of the terminal device. The DRX function may control the terminal device to monitor a physical downlink control channel (physical downlink control channel, PDCCH) in some time periods, and not to monitor the PDCCH in some other time periods. The terminal device may be configured in a carrier aggregation (carrier aggregation, CA) scenario. Carrier aggregation specifically means that at least two component carriers (component carriers, CC) are aggregated, and the terminal device may simultaneously receive or send data on a plurality of carriers based on a capability of the terminal device. When the terminal device receives or sends data by using a plurality of carriers, a same DRX parameter is used for the plurality of carriers, and a physical downlink control channel (physical downlink control channel, PDCCH) is synchronously monitored on the plurality of carriers, or a PDCCH is synchronously monitored on the plurality of carriers by starting or restarting timers, or the like. However, monitoring the PDCCH on the plurality of carriers in this manner causes a waste of power of the terminal device.

EP 2469939 A1 discloses a method for DRX configuration. The method includes configuring DRXs for a plurality of component carriers, and selecting one or more component carriers as anchor component carriers; controlling the DRXs of other non-anchor component carriers by the anchor component carrier.

WO 2018/089730 A1 discloses a method for using two or more available TTIs for transmissions between a base station and a UE may be identified, and a DRX cycle configured based at least in part on the available TTIs. In particular, multiple component carriers may be configured for one or more different TTIs, and one component carrier may be used to cross schedule resources on other component carriers.

### SUMMARY

Embodiments of this application provide a wireless communication method and a terminal device, to reduce a waste of power of the terminal device. The present invention is defined by the appended set of claims.

In the present disclosure, duration of monitoring the PDCCH on the remaining carrier can be reduced, thereby reducing power consumption of the terminal device.

### BRIEF DESCRIPTION OF DRAWINGS

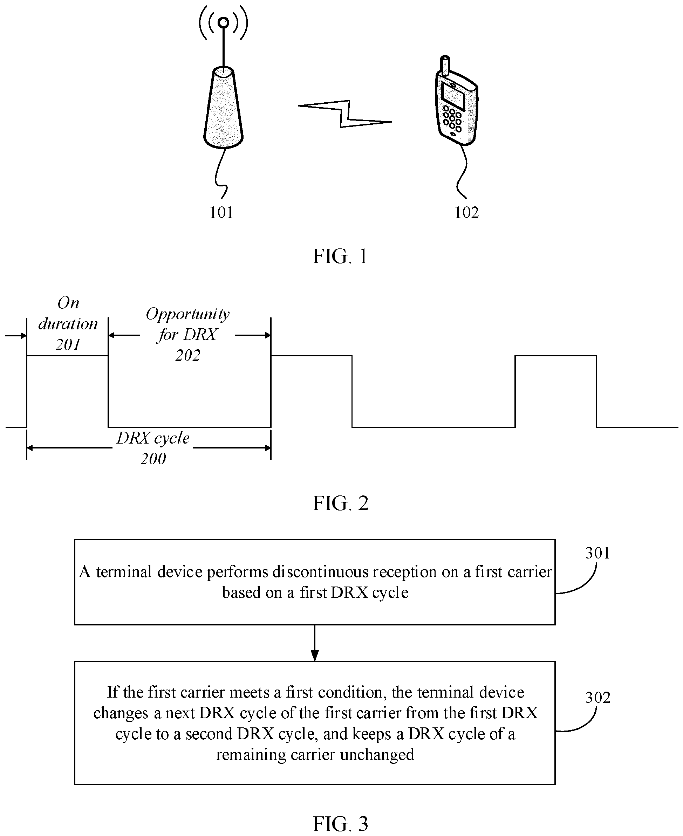

To describe the technical solutions in embodiments of this application more clearly, the following describes the accompanying drawings required for describing the embodiments of this application. It is noted that embodiments with respect to FIGs. 2, 11 and 12 are not part of the invention, but are helpful examples necessary for understanding the invention.
FIG. 1 is a possible schematic architectural diagram of a communications system according to an embodiment of this application;
FIG. 2 is an example diagram of a DRX cycle according to an embodiment of this application;
FIG. 3 is a schematic flowchart of a wireless communication method according to an embodiment of this application;
FIG. 4 is an example diagram of changing a DRX cycle according to an embodiment of this application;
FIG. 5a is another example diagram of changing a DRX cycle according to an embodiment of this application;
FIG. 5b is another example diagram of changing a DRX cycle according to an embodiment of this application;
FIG. 6a is another example diagram of changing a DRX cycle according to an embodiment of this application;
FIG. 6b is another example diagram of changing a DRX cycle according to an embodiment of this application;
FIG. 7 is an example diagram of DRX cycles of different carriers according to an embodiment of this application;
FIG. 8 is a schematic flowchart of another wireless communication method according to an embodiment of this application;
FIG. 9 is an example diagram of DRX cycles of different carriers according to an embodiment of this application;
FIG. 10 is another example diagram of DRX cycles of different carriers according to an embodiment of this application;
FIG. 11 is a schematic structural diagram of a terminal device according to an embodiment of this application;
FIG. 12 is a schematic structural diagram of another terminal device according to an embodiment of this application; and
FIG. 13 is a schematic structural diagram of another terminal device according to an embodiment of this application.

### DESCRIPTION OF EMBODIMENTS

The following describes embodiments of this application with reference to the accompanying drawings in the embodiments of this application.

Referring to FIG. 1, FIG. 1 is a possible schematic architectural diagram of a communications system according to an embodiment of this application. The following first describes network elements in FIG. 1.

An access network (radio access network, RAN) device is mainly responsible for functions such as radio resource management, quality of service (quality of service, QoS) management, and data compression and encryption on an air interface side. The access network device may include a macro base station, a micro base station (also referred to as a small cell), a relay station, an access point, and the like in various forms. In systems that use different radio access technologies, names of a device that has a base station function may be different. For example, in a 5th generation (5th generation, 5G) system, the device is referred to as a gNB; and in an LTE system, the device is referred to as an evolved NodeB (evolved NodeB, eNB or eNodeB).

A terminal device may be a terminal device (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handheld), a laptop computer (laptop computer), a machine type communication (machine type communication, MTC) terminal, or another device that can access a network.

The terminal device and the access network device communicate with each other by using a particular air interface technology. Optionally, the air interface technology is an air interface technology based on an LTE standard. Alternatively, the air interface technology is an air interface technology based on a 5G standard. For example, the wireless air interface is NR (New Radio). Alternatively, the wireless air interface may be a wireless air interface based on a 5G-based technology standard of a more next-generation mobile communications network.

It may be understood that in the communications system shown in FIG. 1, functions and interfaces of the network elements are merely examples. When the network elements are applied to the embodiments of this application, not all functions are necessary.

The wireless communication method provided in the embodiments of this application may be based on the architecture of the communications system shown in FIG. 1. ADRX function is configured for the terminal device in the embodiments of this application. The DRX function controls the terminal device not to monitor a PDCCH in some time periods, to reduce power consumption of the terminal device. A DRX mechanism in LTE is still used in 5GNR.

FIG. 2 is an example diagram of a DRX cycle according to an embodiment of this application. As shown in FIG. 2, a complete DRX cycle 200 (DRX cycle) includes DRX on-duration 201 (DRX-on duration) and an opportunity for DRX 202 (opportunity for DRX).

A terminal device in an RRC connected mode (RRC_CONNECTED) may be configured to perform discontinuous reception (DRX). During DRX, PDCCH monitoring behavior of the terminal device may be controlled. Specifically, during DRX, the terminal device may be controlled to monitor a PDCCH scrambled by using an identity such as a cell radio network temporary identity (cell RNTI, C-RNTI), a configured scheduling RNTI (configured scheduling RNTI, CS-RNTI), an interruption RNTI (interruption RNTI, INT-RNTI), a slot format indication RNTI (slot format indication RNTI, SFI-RNTI), a semi-persistent CSI RNTI (semi-persistent CSI RNTI, SP-CSI-RNTI), a transmit power control-PUCCH-RNTI (transmit power control-PUCCH-RNTI, TPC-PUCCH-RNTI), a transmit power control-PUSCH-RNTI (transmit power control-PUSCH-RNTI, TPC-PUSCH-RNTI), a transmit power control-sounding reference signal-RNTI (transmit power control-sounding reference signal-RNTI, TPC-SRS-RNTI), and the like. The PDCCH scrambled by using the radio network temporary identity (radio network temporary identity, RNTI) may be understood as DCI scrambled by using the RNTI (the PDCCH may carry the DCI).

In NR, a DRX operation is controlled by using one or more of the following parameters in RRC.

The following parameters may be used to define behavior of the terminal device in a DRX cycle:
DRX-on-duration (DRX-on duration): The DRX-on-duration is initial on-duration of a DRX cycle. The terminal device monitors the PDCCH in the on-duration. If the terminal device detects control information carried on the PDCCH, the terminal device starts a DRX-inactivity timer.

DRX-on-duration timer (DRX-on duration timer): On-duration repeats periodically, and a DRX cycle is a repetition period of the on-duration. The DRX-on-duration timer is started at a start moment of the on-duration. Duration of the DRX-on-duration timer is duration of the on-duration.

DRX-inactivity timer (DRX-inactivity timer): It is on-duration starting from PDCCH monitoring of the terminal device to start of the control information. When the terminal device has not detected, in the time period, the control information carried on the PDCCH, the DRX-inactivity timer expires, and the terminal device re-enters a DRX cycle. When the terminal device has detected, in the time period, the control information carried on the PDCCH, the terminal device restarts the DRX-inactivity timer.

Opportunity for DRX (opportunity for DRX): The terminal device does not monitor the PDCCH in this time period.

DRX-long cycle (DRX-long cycle): It indicates a long DRX cycle (a name is a long DRX-cycle in LTE).

DRX-short cycle (DRX-short cycle): It indicates a short DRX cycle (a name is a short DRX-cycle in LTE).

DRX-short cycle timer (DRX-short cycle timer): It is on-duration in which the terminal device uses a short DRX cycle.

DRX-retransmission timer DL (per DL HARQ process): It indicates maximum on-duration until downlink retransmission is received (a name of the timer is a DRX-Retransmission Timer in LTE).

DRX-retransmission timer UL (per UL HARQ process): It indicates a maximum on-duration until when an uplink retransmission grant (grant) is received (the maximum duration until a grant for UL retransmission is received), (a name of the timer is a DRX-UL Retransmission Timer in LTE).

When the DRX cycle is configured, an active time (Active time) includes at least one of the following:
(1) The DRX-on-duration timer, DRX-inactivity timer, DRX-retransmission timer, DRX-UL retransmission timer, or ra-contention resolution timer is running.
(2) A scheduling request (scheduling request, SR) is sent and is in a pending (pending) state.
(3) No PDCCH scrambled by using an initially transmitted C-RNTI has been received after a random access response (random access response, RAR) is successfully received, where the RAR is not an RAR of a random access preamble selected by the terminal device from a contention-based random access preamble.

When the terminal device is in the active time, the terminal device needs to monitor the PDCCH, or when the terminal device is not in the active time, the terminal device does not need to monitor the PDCCH.

Use of a DRX function involves a trade-off between power consumption reduction and reduction in a waiting time of a user. To meet a requirement, two DRX cycles having different lengths may be configured for each terminal device, where the DRX cycles include a short cycle and a long cycle. For example, in a web browsing service, when a user reads a downloaded web page, when continuous PDCCH monitoring of the terminal device usually causes a resource waste, use of a long DRX cycle helps to reduce power consumption. For another example, when a user requests another web page, and data transmission needs to be restarted, use of a short DRX cycle can enable a quick response, to reduce a waiting time of the user.

In actual application, the terminal device may be configured in a carrier aggregation (carrier aggregation, CA) scenario. Carrier aggregation specifically means that at least two component carriers (component carrier, CC) are aggregated. The terminal device may simultaneously perform receiving or sending on one or more carriers based on a capability of the terminal device. In an existing solution, a same DRX parameter is used for a plurality of carriers, and the PDCCH is monitored synchronously, or a timer is started or restarted synchronously to monitor the PDCCH. However, this causes a result that the PDCCU is monitored at a same frequency on some carriers with relatively low load and some carriers with relatively high load, causing a waste of power consumption of the terminal device.

For example, serving cells of the terminal device include a primary cell and a secondary cell. In an RRC connection establishment/reestablishment/switching process, the primary cell may provide mobility information, and in an RRC connection reestablishment/switching process, the primary cell may provide secure input. In actual scheduling, scheduling characteristics in the primary cell and the secondary cell usually are different. For example, scheduling is performed relatively frequently in the primary cell, and it indicates that load of the primary cell is relatively high; and scheduling is performed relatively sparsely in the activated secondary cell, and it indicates that load of the secondary cell is relatively low. Because the PDCCH is monitored in the primary cell and the activated secondary cell at the same time, and although the terminal device monitors the PDCCH in the secondary cell, the terminal device rarely receives the control information, a waste of power consumption of the terminal device is caused.

In this embodiment of this application, the terminal device can monitor the PDCCH on different carriers at different times, so that there is no need to always monitor the PDCCH simultaneously on a carrier with relatively low load and a carrier with relatively high load, thereby reducing power consumption of the terminal device. For details, refer to specific descriptions in the following embodiments.

It should be noted that a secondary cell may be configured for the terminal device based on a capability of the terminal device, and the configured secondary cell and the primary cell together form a serving cell set of the terminal device. A secondary cell may be reconfigured, added, or deleted by using RRC signaling. A carrier corresponding to the primary cell is a primary component carrier PCC (Primary component carrier), and a carrier corresponding to the secondary cell is a secondary component carrier SCC (Secondary component carrier). The plurality of carriers, the primary component carrier, and the secondary component carrier in the embodiments of this application are activated carriers of the terminal device.

It should be further noted that names of various timers and names of various carriers in the embodiments of this application are merely examples, and different names may be used in actual application. This is not limited in this application. "Having received control information" in the embodiments of this application specifically means that control information carried on a PDCCH is successfully received, or a data packet carried on a PDCCH is successfully decoded, or is described as "having received a PDCCH".

The embodiments of this application may be further applied to another communications system in which a PDCCH needs to be monitored on a plurality of carriers by using a DRX cycle. The system architecture described in the embodiments of this application are intended to describe the technical solutions in the embodiments of this application more clearly. A person of ordinary skill in the art may know that with evolution of the network architecture, the technical solutions provided in the embodiments of this application are also applicable to similar technical problems. In the descriptions of this application, "a plurality of" means two or more, and "at least two" means two or more.

FIG. 3 is a schematic flowchart of a wireless communication method according to an embodiment of this application.

301. A terminal device performs discontinuous reception on a first carrier based on a first DRX cycle, where the first carrier is any one of a plurality of carriers.

302. If the first carrier meets a first condition, the terminal device changes a next DRX cycle of the first carrier from the first DRX cycle to the second DRX cycle, and keeps a DRX cycle of a remaining carrier unchanged.

In this embodiment of this application, the wireless communication method is applied to a wireless communications system that includes an access network device and a terminal device. The access network device configures at least two discontinuous reception DRX cycles for the terminal device, and the at least two DRX cycles include a first DRX cycle and a second DRX cycle.

The first DRX cycle and the second DRX cycle have different cycle lengths. The first DRX cycle and the second DRX cycle are any two DRX cycles having different lengths in the at least two DRX cycles. This embodiment of this application is described by using the first DRX cycle and the second DRX cycle as an example.

In a carrier aggregation scenario, the terminal device may receive and send data on a plurality of carriers. The terminal device may perform discontinuous reception on the plurality of carriers based on a DRX cycle, to monitor a PDCCH. In an optional manner, DRX cycles used in a same time period for the plurality of carriers may be completely or partially the same. For example, the terminal device performs discontinuous reception on the first carrier by using the first DRX cycle, and performs discontinuous reception on a carrier other than the first carrier in the plurality of carriers by using the first DRX cycle or the second DRX cycle, to monitor whether control information has been received, where the control information is carried on the PDCCH.

Optionally, one of the plurality of carriers corresponds to one first timer. First timers on the carriers may not be started or restarted at the same time.

The following describes, in detail for different cases, different implementation solutions shown in FIG. 3.
1. In a possible implementation solution, the first condition may be that the terminal device has received the control information on the first carrier. Alternatively, the first condition may be that the terminal device detects that a first timer on the first carrier expires. In this case, the length of the first DRX cycle is greater than the length of the second DRX cycle. That the first timer expires means that the terminal device has not received the control information in a time period of the started or restarted first timer.

If the terminal device has received the control information in on-duration (on-duration) of the first DRX cycle of the first carrier, the terminal device changes the next DRX cycle of the first carrier from the first DRX cycle to the second DRX cycle, and keeps the DRX cycle of the remaining carrier unchanged.

If the terminal device detects, on the first carrier, that the first timer expires, the terminal device changes the next DRX cycle of the first carrier from the first DRX cycle to the second DRX cycle, and keeps the DRX cycle of the remaining carrier unchanged.

Optionally, the first timer may be started or restarted when the following condition is met: the terminal device has received the control information in the on-duration (on-duration) of the first DRX cycle of the first carrier, or the terminal device has received the control information in the time period of the first timer on the first carrier. In one embodiment, the first timer is a DRX-inactivity timer, and a value of the first timer is an integer greater than or equal to 0. Optionally, a DRX-inactivity timer on each carrier may run independently.

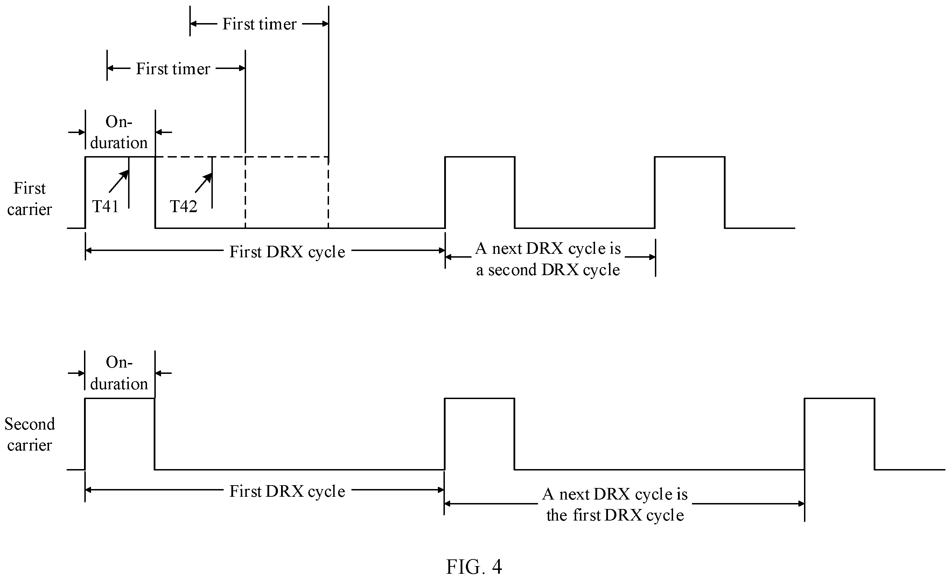

For example, FIG. 4 is an example diagram of changing a DRX cycle according to an embodiment of this application. Discontinuous reception is performed on both the first carrier and a second carrier by using the first DRX cycle. The first carrier is a carrier that meets the first condition in the plurality of carriers, and the second carrier is any carrier other than the first carrier.

As shown in FIG. 4, for the first carrier, if the terminal device successfully receives the control information at a moment T41 in on-duration of the first carrier, the terminal device changes the next DRX cycle of the first carrier to the second DRX cycle. In addition, because the terminal device successfully receives the control information at the moment T41, the terminal device starts the first timer at the moment T41, and monitors the PDCCH in a time period of the first timer. Then, the terminal device successfully receives the control information at a moment T42, and the terminal device restarts the first timer at the moment T42, and monitors the PDCCH in a time period of the first timer. Because no control information has been received in the time period of the first timer restarted at the moment T42, and it indicates that the first timer expires, the terminal device changes the next DRX cycle of the first carrier to the second DRX cycle. It can be learned from FIG. 4 that no control information has been received in the time period of the first timer restarted at the moment T42. Therefore, PDCCH monitoring is stopped at an end moment of the first timer restarted at the moment T42, in the first DRX cycle.

For the second carrier, because the terminal device has not received the control information in on-duration of the second carrier, a timer is not started on the second carrier, and the terminal device continues to perform discontinuous reception by using the first DRX cycle, to keep the DRX cycle of the second carrier unchanged. In this way, duration of monitoring the PDCCH on the second carrier can be reduced.

In the possible implementation solution described in 1, the length of the first DRX cycle is greater than the length of the second DRX cycle. In this way, in a same time period, duration of monitoring the PDCCH by using the first DRX cycle is greater than duration of monitoring the PDCCH by using the second DRX cycle. Therefore, when the terminal device needs to change a long DRX cycle of the first carrier to a short DRX cycle, the DRX cycle of the remaining carrier is kept unchanged, so that duration of monitoring the PDCCH on the remaining carrier can be reduced, thereby reducing power consumption of the terminal device.

With reference to the solution described in the wireless communication method 1 in FIG. 3, in this embodiment of this application, when two cycles, namely, a DRX-long cycle and a DRX-short cycle, are configured, and when a DRX-inactivity timer of the terminal device on a carrier expires or when the terminal device has received the control information in on-duration of a carrier, a DRX-short cycle timer is started or restarted on the carrier, and a next cycle is changed to the DRX-short cycle. The terminal device does not start or restart the DRX-short cycle timer on the remaining carrier, a next cycle is not changed accordingly, and an original cycle type is kept unchanged. However, in an existing solution, when two cycles, namely, a DRX-long cycle and a DRX-short cycle, are configured, if a DRX-inactivity timer on a carrier expires, the terminal device starts or restarts DRX-short cycle timers on all carriers, and changes next cycles to the DRX-short cycle. In this way, the terminal device starts or restarts the DRX-short cycle timer only on a carrier on which a DRX-inactivity timer expires or the control information has been received in on-duration, changes a next cycle to the DRX-short cycle, and keeps a DRX cycle of a remaining carrier unchanged, thereby reducing configuration of DRX-short cycles, and reducing duration of monitoring the PDCCH.

2. In a possible implementation solution, the first condition is that the terminal device detects that a first timer on the first carrier expires. In this case, the length of the first DRX cycle is greater than the length of the second DRX cycle. That the first timer expires means that the terminal device has received the control information in each first DRX cycle in a time period corresponding to the first timer.

If the terminal device has received the control information in each first DRX cycle in the time period corresponding to the first timer on the first carrier, the terminal device changes the next DRX cycle of the first carrier from the first DRX cycle to the second DRX cycle, and keeps the DRX cycle of the remaining carrier unchanged.

Optionally, when the terminal device meets a second condition, the terminal device starts or restarts the first timer. The second condition may be that the terminal device has not received the control information in the first DRX cycle of the first carrier. Alternatively, the second condition may be that a second timer of the terminal device on the first carrier expires, where that the second timer expires means that the terminal device has not received the control information in a time period corresponding to the second timer.

The terminal device performs discontinuous reception in the time period of the first timer on the first carrier by using the first DRX cycle. Optionally, before the first timer is started or restarted, a DRX cycle used by the terminal device on the first carrier may be the first DRX cycle or the second DRX cycle.

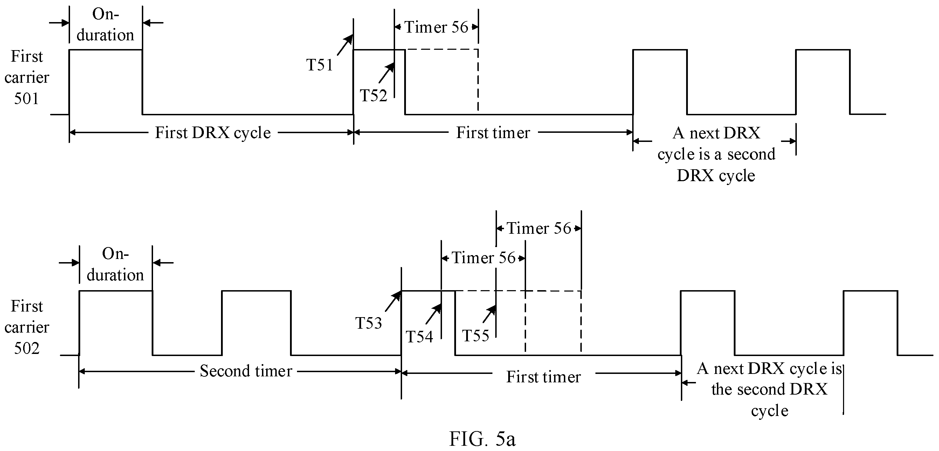

For example, FIG. 5a is an example diagram of changing a DRX cycle according to an embodiment of this application. A first carrier 501 is defined as follows: A first timer is started or restarted when the second condition is that no control information has been received in a first DRX cycle of the first carrier 501. A first carrier 502 is defined as follows: A first timer is started when the second condition is that a second timer on the first carrier 502 expires. Details are as follows:

For the first carrier 501, the terminal device has not received the control information in the first DRX cycle of the first carrier 501. Then, the terminal device starts the first timer at an end moment T51 of the first DRX cycle, and if the terminal device successfully receives the control information at a moment T52 in on-duration of the first timer, the terminal device changes a next DRX cycle of the first carrier to the second DRX cycle, and keeps DRX of a carrier other than the first carrier 501 in the plurality of carriers unchanged.

Optionally, when the control information is successfully received at the moment T52 on the first carrier 501, the terminal device may start a timer 56, and monitor the PDCCH in a time period of the timer 56. For example, the timer 56 is a DRX-inactivity timer. It can be learned from the figure that no control information has been received in the time period of the timer 56, and it indicates that the timer 56 expires. Therefore, PDCCH monitoring is stopped at an end moment of the timer 56.

For the first carrier 502, the second timer of the terminal device on the first carrier 502 expires. Then, the terminal device starts the first timer at an end moment T53 of the second timer, and if the terminal device successfully receives the control information at a moment T54 in on-duration of the first timer, the terminal device changes a next DRX cycle of the first carrier to the second DRX cycle, and keeps DRX of a carrier other than the first carrier 502 in the plurality of carriers unchanged.

Optionally, when the control information is successfully received at the moment T54 on the first carrier 502, the terminal device may start a timer 56, and monitor the PDCCH in a time period of the timer 56. For example, the timer 56 is a DRX-inactivity timer. Then, the terminal device successfully receives the control information at a moment T55, and the terminal device restarts the timer 56 at the moment T55, and monitors the PDCCH in a time period of the timer 56. Because no control information has been received in the time period of the timer 56 restarted at the moment T55, PDCCH monitoring is stopped at an end moment of the timer 56 restarted at the moment T55, in the first DRX cycle. Duration or a value of the timer 56 is not limited in this embodiment of this application.

In the possible implementation solution described in 2, the time period of the second timer may be duration of i second DRX cycles, and i is a positive integer. For example, a value of the second timer may be set to 2, and it indicates that the time period corresponding to the second timer includes two second DRX cycles. For example, the second timer is a DRX-short cycle timer.

In the possible implementation solution described in 2, the time period of the first timer may be duration of j first DRX cycles, and j is a positive integer. For example, a value of the first timer may be set to 1, and it indicates that the time period corresponding to the first timer includes one first DRX cycle. For example, the first timer is a DRX-long cycle timer.

Optionally, values of first timers corresponding to different carriers in the plurality of carriers are not completely the same. In other words, the values of the first timers corresponding to the different carriers in the plurality of carriers may be different. Alternatively, values of first timers corresponding to some of the plurality of carriers may be the same, and values of first timers corresponding to some carriers may be different. In specific implementation, each of the plurality of carriers has a corresponding first timer. For example, as shown in FIG. 5a, there is the first timer corresponding to the first carrier 501 and the first timer corresponding to the first carrier 502. Similarly, optionally, for the second timer and the timer 56 in FIG. 5a, values of second timers corresponding to different carriers in the plurality of carriers are not completely the same. Values of timers 56 corresponding to different carriers in the plurality of carriers are not completely the same.

For example, if the plurality of carriers are divided into a primary component carrier and a secondary component carrier, different values may be configured for first timers corresponding to the primary component carrier and the secondary component carrier, and the value of the first timer corresponding to the primary component carrier is less than or equal to the value of the first timer corresponding to the secondary component carrier. For example, a first timer value set {1, 2, 3 } is configured for the primary component carrier, and a second timer value set {3, 4, 5} is configured for the secondary component carrier. For another example, a same first timer value set {1, 2, 3, 4, 5, 6} is configured for the primary component carrier and the secondary component carrier provided that the value of the first timer corresponding to the primary component carrier is less than or equal to the value of the first timer corresponding to the secondary component carrier in actual application.

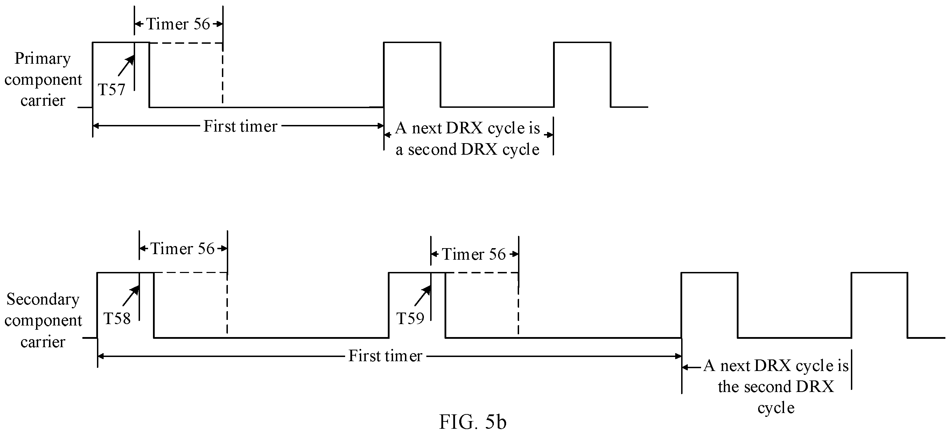

For example, FIG. 5b is an example diagram of changing a DRX cycle according to an embodiment of this application. The value of the first timer on the primary component carrier is 1, and it specifically means that a time period of the first timer on the primary component carrier includes one first DRX cycle. The value of the first timer on the secondary component carrier is 2, and it specifically means that a time period of the first timer on the secondary component carrier includes two first DRX cycles.

As shown in FIG. 5b, the terminal device successfully receives the control information at a moment T57 of the first timer on the primary component carrier, and it indicates that the first timer of the terminal device on the primary component carrier expires. In this way, the terminal device changes a next DRX cycle of the primary component carrier from the first DRX cycle to the second DRX cycle. The terminal device successfully receives the control information at a moment T58 and a moment T59 of the first timer on the secondary component carrier, and it indicates that the first timer of the terminal device on the secondary component carrier expires. In this way, the terminal device changes a next DRX cycle of the secondary component carrier from the first DRX cycle to the second DRX cycle. The terminal device may start the timer 56 at the moment T57, the moment T58, and the moment T59. It can be learned that because the value of the first timer corresponding to the secondary component carrier is relatively large, the control information needs to be successfully received in a relatively large quantity of long DRX cycles of the secondary component carrier, to change the long DRX cycle to a short DRX cycle on the secondary component carrier. In this way, duration of monitoring the PDCCH on the secondary component carrier can be reduced, thereby reducing power consumption of the terminal device.

Optionally, the value of the first timer is configured by using radio resource control RRC signaling. Specifically, the access network device sends the value or the value set of the first timer to the terminal device by using RRC signaling.

In the possible implementation solution described in 2, the length of the first DRX cycle is greater than the length of the second DRX cycle. In this way, in a same time period, duration of monitoring the PDCCH by using the first DRX cycle is greater than duration of monitoring the PDCCH by using the second DRX cycle. Therefore, when the terminal device needs to change the long DRX cycle of the first carrier to the short DRX cycle, the DRX cycle of the remaining carrier is kept unchanged, so that duration of monitoring the PDCCH on a remaining carrier can be reduced. In addition, because the primary component carrier is scheduled relatively frequently, and the activated secondary component carrier is scheduled relatively sparsely, in this embodiment of this application, a relatively large value is configured for the first timer corresponding to the secondary component carrier, so that duration of monitoring the PDCCH on the secondary component carrier can be reduced, thereby reducing power consumption of the terminal device.

With reference to the solution described in the wireless communication method 2 in FIG. 3, when two cycles, namely, a DRX-long cycle and a DRX-short cycle, are configured, a base station configures two different sets of DRX-long cycle timers for a PCell and an SCell, a DRX-long cycle timer value configured for the PCell is less than or equal to a DRX-long cycle timer value configured for the SCell. In an optional solution, current configuration of the PCell may be kept unchanged, and a set of DRX-long cycle timers may be configured for the SCell.

The terminal device separately monitors the PDCCH in on duration of the PCell and the SCell. The terminal device starts or restarts a DRX-short cycle timer on a carrier of the PCell or the SCell and changes a next cycle to the DRX-short cycle only when a DRX-long cycle timer on the carrier expires.

Expiration of the DRX-long cycle timer is related to a DRX-long cycle timer value configured for each carrier. If the DRX-long cycle timer value is set to N, when the terminal device needs to successfully receive the control information in on duration in N consecutive DRX-long cycles of the carrier, the DRX-long cycle timer expires.

The DRX-long cycle timer is started when one of the following conditions is met:
1. The terminal device has not received the control information in a DRX-long cycle.
2. A configured DRX-short cycle timer expires.

Specifically, the terminal device starts a counter when starting the DRX-long cycle timer. If the PDCCH has been received in N consecutive DRX-long cycles, the DRX-long cycle timer expires, and the counter is reset. If no control information has been received in a DRX-long cycle in the N consecutive DRX-long cycles, the counter is reset and the DRX-long cycle timer stops. When the terminal device has received the control information in the DRX-long cycle, or when a DRX-inactivity timer of the terminal device in the DRX-long cycle expires, the terminal device starts or restarts the DRX-long cycle timer.

Optionally, DRX-long cycle timer values of different SCells may be the same or may be different.

It can be learned that when the two cycles, namely, the DRX-long cycle and the DRX-short cycle, are configured, in an existing solution, if a DRX-inactivity timer on a carrier expires, next cycles of all carriers are changed to the DRX-short cycle. In this embodiment of this application, the terminal device separately monitors the PDCCH in on duration of the PCell and the SCell, changes a next cycle of a carrier of the PCell or the SCell to the DRX-short cycle only when a DRX-long cycle timer on the carrier expires, and configures two different sets of DRX-long cycle timers for the PCell and the SCell, to reduce configuration of the DRX short cycle in the SCell, thereby reducing duration of monitoring the PDCCH.

3. In a possible implementation solution, the first condition is that the terminal device detects that a first timer on the first carrier expires. In this case, the length of the second DRX cycle is greater than the length of the first DRX cycle. That the first timer expires means that the terminal device has not received the control information in a time period corresponding to the first timer.

If the terminal device has not received the control information in the time period corresponding to the first timer on the first carrier, and it indicates that the first timer on the first carrier expires, the terminal device changes the next DRX cycle of the first carrier from the first DRX cycle to the second DRX cycle, and keeps the DRX cycle of the remaining carrier unchanged.

Optionally, when the terminal device meets a third condition, the terminal device starts or restarts the first timer. The third condition may be that the terminal device has received the control information in the first DRX cycle of the first carrier. Alternatively, the third condition may be that the terminal device detects that a third timer expires in the first DRX cycle of the first carrier, where that the third timer expires means that the terminal device has not received the control information in a time period corresponding to the third timer. Alternatively, the third condition may be that the terminal device detects that a fourth timer on the first carrier expires, where that the fourth timer expires means that the terminal device has received the control information in each second DRX cycle in a time period corresponding to the fourth timer.

The terminal device performs discontinuous reception in the time period of the first timer on the first carrier by using the first DRX cycle. Optionally, before the first timer is started or restarted, a DRX cycle used by the terminal device on the first carrier may be the first DRX cycle or the second DRX cycle.

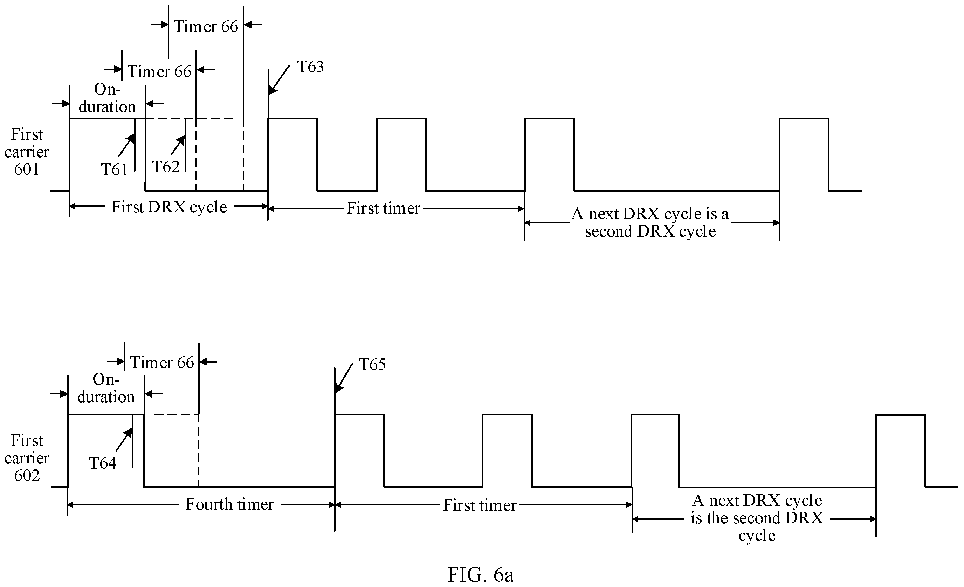

For example, FIG. 6a is an example diagram of changing a DRX cycle according to an embodiment of this application. A first carrier 601 may be defined as follows: A first timer is started or restarted when the third condition is that the control information has been received in the first DRX cycle of the first carrier 601. Alternatively, a first carrier 601 may be defined as follows: A first timer is started or restarted when a third timer expires in the first DRX cycle of the first carrier. A first carrier 602 is defined as follows: A first timer is started when the third condition is that a third timer or a fourth timer on the first carrier 602 expires. A timer 64 in FIG. 6a is used as an example of the third timer, and specific descriptions are as follows:

For the first carrier 601, if the terminal device successfully receives the control information at a moment T61 in the first DRX cycle, the terminal device may start or restart the first timer at an end moment T63 of the first DRX cycle. If the terminal device has not received the control information in a time period of the first timer on the first carrier 601, and it indicates that the first timer on the first carrier 601 expires, the terminal device changes a next DRX cycle of the first carrier 601 to the second DRX cycle, and keeps DRX of a carrier other than the first carrier 601 in the plurality of carriers unchanged.

Optionally, when the control information is successfully received at the moment T61 in the first DRX cycle, the terminal device may start a timer 66, and monitor the PDCCH in a time period of the timer 66. For example, the timer 66 is a DRX-inactivity timer. Then, the control information is successfully received at a moment T62, and the terminal device restarts the timer 66 at the moment T62, and monitors the PDCCH in a time period of the timer 66. Because no control information has been received in the time period of the timer 66 restarted at the moment T62, and it indicates that the timer 66 (namely, the third timer) expires, the terminal device stops monitoring the PDCCH at an end moment of the timer 66 restarted at the moment T62, in the first DRX cycle, and the terminal device may further start the first timer at an end moment T63 in the first DRX cycle.

For the first carrier 602, description is provided by using an example in which a time period of the fourth timer includes one first DRX cycle. If the terminal successfully receives the control information at a moment T64 in the first DRX cycle, the terminal device may start the first timer at an end moment T65 of the fourth timer. If the terminal device has not received the control information in a time period of the first timer on the first carrier 602, and it indicates that the first timer on the first carrier 602 expires, the terminal device changes a next DRX cycle of the first carrier 602 to the second DRX cycle, and keeps DRX of a carrier other than the first carrier 602 in the plurality of carriers unchanged.

Optionally, when the control information is successfully received at the moment T64 in the first DRX cycle, the terminal device may start a timer 66, and monitor the PDCCH in a time period of the timer 66. For example, the timer 66 is a DRX-inactivity timer. Because no control information has been received in the time period of the timer 66 restarted at the moment T64, and it indicates that the timer 66 (namely, the third timer) expires, the terminal device stops monitoring the PDCCH at an end moment of the timer 66 in the first DRX cycle, and the terminal device may further start the first timer at an end moment T65 of the first DRX cycle.

In the possible implementation solution described in 3, the time period of the fourth timer may be duration of m first DRX cycles, and m is a positive integer. For example, a value of the fourth timer may be set to 2, and it indicates that the time period corresponding to the fourth timer includes two first DRX cycles. For example, the fourth timer is a DRX-long-cycle-timer.

In the possible implementation solution described in 3, the time period of the first timer may be duration of n second DRX cycles, and n is a positive integer. For example, a value of the first timer may be set to 2, and it indicates that the time period corresponding to the first timer includes two second DRX cycles. For example, the first timer is a DRX-short cycle timer.

Further, values of first timers corresponding to different carriers in the plurality of carriers are not completely the same. Similarly, optionally, for the third timer, the fourth timer, and the timer 66 in FIG. 6a, values of third timers that corresponding to different carriers in the plurality of carriers are not completely the same, values of fourth timers corresponding to different carriers in the plurality of carriers are not completely the same, and values of timers 66 corresponding to different carriers in the plurality of carriers are not completely the same.

For example, if the plurality of carriers are divided into a primary component carrier and a secondary component carrier, different values may be configured for first timers corresponding to the primary component carrier and the secondary component carrier, and the value of the first timer corresponding to the primary component carrier is greater than or equal to the value of the first timer corresponding to the secondary component carrier. For example, a first timer value set {3, 4, 5} is configured for the primary component carrier, and a second timer value set {1, 2, 3} is configured for the secondary component carrier. For another example, a same first timer value set {1, 2, 3, 4, 5, 6} is configured for the primary component carrier and the secondary component carrier provided that the value of the first timer corresponding to the primary component carrier is greater than or equal to the value of the first timer corresponding to the secondary component carrier in actual application.

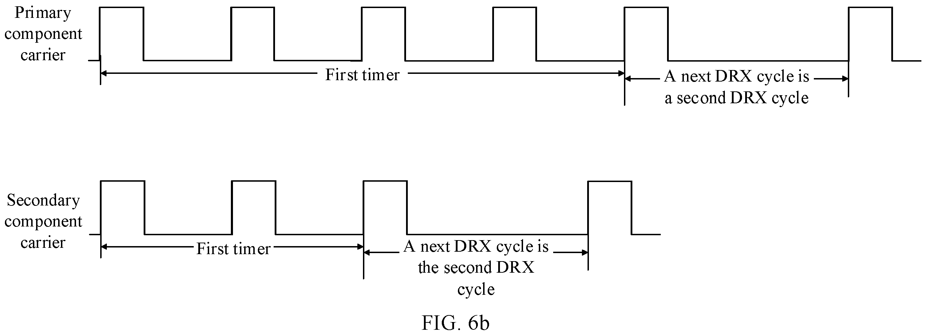

For example, FIG. 6b is an example diagram of changing a DRX cycle according to an embodiment of this application. The value of the first timer on the primary component carrier is 4, and it specifically means that a time period of the first timer on the primary component carrier includes four first DRX cycles. The value of the first timer on the secondary component carrier is 2, and it specifically means that a time period of the first timer on the secondary component carrier includes two first DRX cycles.

As shown in FIG. 6b, the terminal device has not received the control information in each first DRX cycle in the first timer on the primary component carrier, and it indicates that the first timer of the terminal device on the primary component carrier expires. In this way, a next DRX cycle of the terminal device on the primary component carrier is changed from the first DRX cycle to the second DRX cycle. The terminal device has not received the control information in each first DRX cycle in the first timer on the secondary component carrier, and it indicates that the first timer of the terminal device on the secondary component carrier expires. In this way, a next DRX cycle of the terminal device on the secondary component carrier is changed from the first DRX cycle to the second DRX cycle. It can be learned that because the value of the first timer corresponding to the secondary component carrier is relatively small, no control information has been received in a relatively small quantity of short DRX cycles of the secondary component carrier, so that the short DRX cycle can be changed to a long DRX cycle on the secondary component carrier. In this way, duration of monitoring the PDCCH on the secondary component carrier can be reduced, thereby reducing power consumption of the terminal device.

Optionally, the value of the first timer is configured by using radio resource control RRC signaling. Specifically, the access network device sends the value or the value set of the first timer to the terminal device by using RRC signaling.

In the possible implementation solution described in 3, because the primary component carrier is scheduled relatively frequently, and the activated secondary component carrier is scheduled relatively sparsely, in this embodiment of this application, a relatively large value is configured for the first timer corresponding to the primary component carrier, and when the terminal device needs to change the short DRX cycle to the long DRX cycle, the DRX cycle on the secondary component carrier is kept unchanged, so that duration of monitoring the PDCCH on the secondary component carrier can be reduced, thereby reducing power consumption of the terminal device.

With reference to the solution described in the wireless communication method 3 in FIG. 3, when two cycles, namely, a DRX-long cycle and a DRX-short cycle, are configured, two different sets of DRX-short cycle timer values are configured for a PCell and an SCell, and the DRX-short cycle timer value configured for the PCell is greater than or equal to the DRX-short cycle timer value configured for the SCell. The terminal device separately monitors the PDCCH in on duration of the PCell and the SCell, and changes a next cycle of a carrier of the PCell or the SCell to the DRX-long cycle only when a DRX-short cycle timer on the carrier expires.

Expiration of the DRX-short cycle timer is related to a DRX-short cycle timer value configured for each carrier. If the DRX-short cycle timer value is set to N, when the terminal device has not received the control information in N consecutive DRX-short cycles of the carrier, the DRX-short cycle timer expires.

The DRX-short cycle timer is started or restarted when one of the following conditions is met:
1. The terminal device has received the control information in a DRX-short cycle.
2. A DRX-inactivity timer of the terminal device in a DRX-short cycle expires.
3. A configured DRX-long cycle timer expires.

Optionally, DRX-short cycle timer values of different SCells may be the same or may be different.

It can be learned that when the two cycles, namely, the DRX-long cycle and the DRX-short cycle, are configured, in an existing solution, if a DRX-short cycle timer on a carrier expires, next cycles of all carriers are changed from the DRX-short cycle to the DRX-long cycle, and the PCell and SCell share one set of DRX-short cycle timer values. In this embodiment of this application, two different sets of DRX-short cycle timer values are configured for the PCell and the SCell, to reduce configuration of the DRX-short cycle in the SCell, thereby reducing duration of monitoring the PDCCH.

4. In a possible implementation solution, the first condition is that a quantity of pieces of control information that has been received by the terminal device in a first time period is greater than a preset value. In this case, the length of the first DRX cycle is greater than the length of the second DRX cycle. The first time period is duration corresponding to the first DRX cycle, the preset value is k, and k is a positive integer.

If the quantity of pieces of the control information that has been received by the terminal device in the first time period of the first carrier is greater than or equal to the preset value, the terminal device changes the next DRX cycle of the first carrier from the first DRX cycle to the second DRX cycle, and keeps the DRX cycle of the remaining carrier unchanged.

Optionally, the first time period may be p first DRX cycles or q second DRX cycles, and p and q are positive integers. This is not limited in this embodiment of this application.

Further, preset values corresponding to different carriers in the plurality of carriers are not completely the same. In other words, the preset values corresponding to the different carriers in the plurality of carriers may be different. Alternatively, preset values corresponding to some of the plurality of carriers may be the same, and preset values corresponding to some carriers may be different. In specific implementation, each of the plurality of carriers has a corresponding preset value.

For example, if the plurality of carriers are divided into a primary component carrier and a secondary component carrier, different preset values may be configured for the primary component carrier and the secondary component carrier, and the preset value corresponding to the primary component carrier is less than or equal to the preset value corresponding to the secondary component carrier. For example, the preset value configured for the primary component carrier is 3, and the preset value configured for the secondary component carrier is 5. It can be learned that the terminal device can change a long DRX cycle of the secondary component carrier to a short DRX cycle only when the terminal device has received a relatively large amount of control information on the secondary component carrier, so that duration of monitoring the PDCCH on the secondary component carrier can be reduced, thereby reducing power consumption of the terminal device.

Optionally, the preset value is configured by using radio resource control RRC signaling. Specifically, the access network device sends the preset value to the terminal device by using RRC signaling.

In the possible implementation solution described in 4, the length of the first DRX cycle is greater than the length of the second DRX cycle. In this way, in a same time period, duration of monitoring the PDCCH by using the first DRX cycle is greater than duration of monitoring the PDCCH by using the second DRX cycle. Therefore, when the terminal device needs to change a long DRX cycle of the first carrier to a short DRX cycle, the DRX cycle of the remaining carrier is kept unchanged, so that duration of monitoring the PDCCH on the remaining carrier can be reduced. In addition, because the primary component carrier is scheduled relatively frequently, and the activated secondary component carrier is scheduled relatively sparsely, in this embodiment of this application, the configured preset value corresponding to the secondary component carrier is relatively large. In this way, the terminal device can change the long DRX cycle of the secondary component carrier to the short DRX cycle when the terminal device has received a relatively large amount of control information on the secondary component carrier, so that duration of monitoring the PDCCH on the secondary component carrier can be reduced, thereby reducing power consumption of the terminal device.

With reference to the solution described in the wireless communication method 4 in FIG. 3, when two cycles, namely, a DRX-long cycle and a DRX-short cycle, are configured, if one DRX-inactivity timer expires in the DRX-long cycle in a PCell or a PDCCH is successfully received in the DRX-long cycle in a PCell, a next cycle is changed to the DRX-short cycle. For an SCell, the terminal device needs to receive N PDCCHs in one DRX-long cycle, where N>1. To be specific, if a quantity of pieces of control information that has been received by the terminal device in the DRX-long cycle is greater than or equal to N, a next cycle of the SCell is changed to the DRX-short cycle. If the quantity of pieces of the control information that has been received by the terminal device in the DRX-long cycle is less than N, the next cycle is kept unchanged, and is still the DRX-long cycle.

Optionally, when the two cycles, namely, the DRX-long cycle and the DRX-short cycle, are configured, a counter is started in each DRX-long cycle. When a value of the counter reaches N, a next cycle is changed to the DRX-short cycle.

It can be learned that when one PDCCH is successfully received in the DRX-long cycle in the PCell, the next cycle of the PCell is changed to the DRX-short cycle. When more than one PDCCH is successfully received in the DRX-long cycle in the SCell, a next cycle of the SCell is changed to the DRX-short cycle. Therefore, in the solution in this embodiment of this application, configuration of the DRX-short cycle in the SCell can be reduced, thereby reducing duration of monitoring the PDCCH.

5. In a possible implementation solution, both the first DRX cycle and the second DRX cycle in the foregoing solutions 1, 2, 3, and 4 include on-duration (on-duration). Different carriers correspond to different on-duration lengths.

The plurality of carriers include a primary component carrier and a secondary component carrier. In a same DRX cycle, an on-duration length corresponding to the primary component carrier is greater than an on-duration length corresponding to the secondary component carrier.

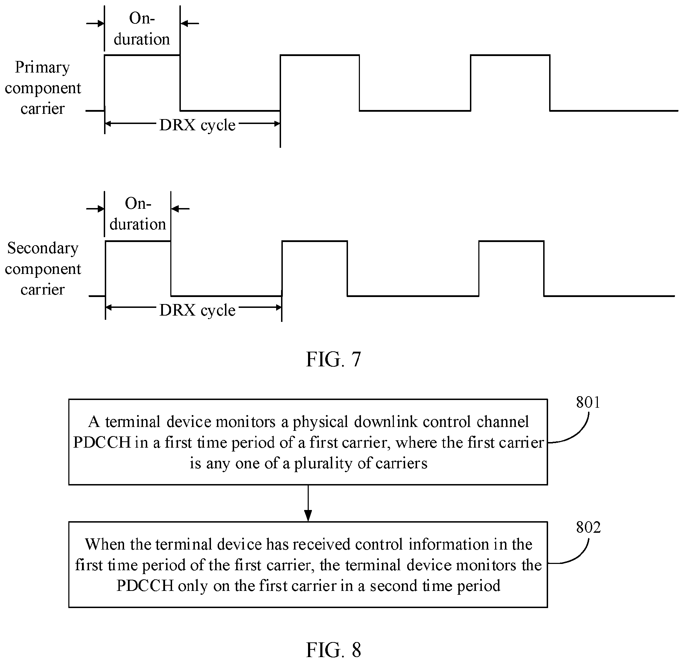

FIG. 7 is an example diagram of DRX cycles of different carriers according to an embodiment of this application. As shown in FIG. 7, discontinuous reception is performed on both the primary component carrier and the secondary component carrier by using DRX cycles, and the on-duration length of the primary component carrier is greater than the on-duration length corresponding to the secondary component carrier. In this way, for a same DRX cycle, duration of monitoring the PDCCH on the secondary component carrier can be reduced, thereby reducing power consumption of the terminal device.

Optionally, different secondary component carriers may correspond to different on-duration lengths.

With reference to the solution described in the wireless communication method 5 in FIG. 3, for a PCell and an SCell, two groups of drx-onDurationTimer values may be configured, or two different drx-onDurationTimer values may be selected from one group of values, and a drx-onDurationTimer value configured for the PCell is greater than or equal to a drx-onDurationTimer value configured for the SCell. In addition, the PCell and the SCell have a same DRX cycle length and a same cycle frequency, and start positions of onDuration of the PCell and the SCell are aligned (align). In this way, duration of monitoring the PDCCH in the onDuration in the SCell can be reduced, thereby reducing power consumption.

It should be noted that in the implementation solution described in FIG. 3, that the control information has been received specifically means that a data packet carried on the PDCCH is successfully decoded.

FIG. 8 is a schematic flowchart of a possible wireless communication method according to an embodiment of this application.

801. A terminal device monitors a physical downlink control channel PDCCH in a first time period of a first carrier, where the first carrier is any one of a plurality of carriers.

802. When the terminal device has received control information in the first time period of the first carrier, the terminal device monitors the PDCCH only on the first carrier in a second time period.

In a carrier aggregation scenario, the terminal device may receive and send data on a plurality of carriers. The terminal device may perform discontinuous reception on the plurality of carriers based on a DRX cycle, to monitor the PDCCH. DRX cycles used on the plurality of carriers in a same time period may be completely the same or may be partially the same. For example, the terminal device monitors the PDCCH on the first carrier by using a first DRX cycle, and monitors the PDCCH on a carrier other than the first carrier in the plurality of carriers by using the first DRX cycle or by using a second DRX cycle, to detect whether the control information has been received, where the control information is carried on the PDCCH. On-duration of the plurality of carriers may not be completely aligned in terms of time, and it indicates that the on-duration of the plurality of carriers may not be aligned in terms of time, or that on-duration of some carriers may be aligned in terms of time. This is not limited in this embodiment of this application.

When the terminal device has received the control information in the first time period of the first carrier, the terminal device monitors the PDCCH only on the first carrier in the second time period, and does not monitor the PDCCH on another carrier on which no control information has been received in the first time period. In this way, PDCCH monitoring on the carrier on which no control information has been received can be reduced, thereby reducing power consumption of the terminal device.

In a feasible implementation solution, when the control information has been received in the first time period of the first carrier, the terminal device monitors the PDCCH only on the first carrier in the second time period, and the terminal device does not monitor the PDCCH on the carrier other than the first carrier in the second time period. The second time period does not overlap the first time period.

Specific implementation solutions of the wireless communication method shown in FIG. 8 are described in detail below for different cases.
1. In a possible implementation solution, when the terminal device has received the control information in the first time period of the first carrier, the terminal device starts or restarts first timers on the plurality of carriers, and after the first timers are started or restarted, the terminal device monitors the PDCCH only on the first carrier in the second time period, and does not monitor the PDCCH on the carrier other than the first carrier in the second time period.

A start moment of the first timer is not later than a start moment of the second time period, and an end moment of the first timer is the same as an end moment of the second time period.

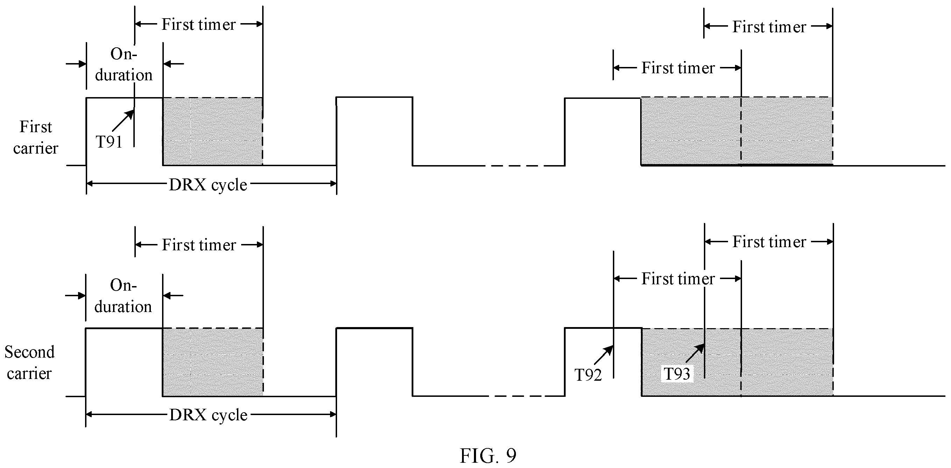

FIG. 9 is an example diagram of DRX cycles of different carriers according to an embodiment of this application. As shown in FIG. 9, discontinuous reception is performed on both the first carrier and a second carrier by using DRX cycles, and each of the first carrier and the second carrier is any one of the plurality of carriers.

As shown in FIG. 9, the terminal device successfully receives the control information at a moment T91 in on-duration of the first carrier, and the terminal device starts first timers at both the moment T91 on the first carrier and a moment T91 on the second carrier. Then, the terminal device monitors the PDCCH in a time period of the first timer on the first carrier, and the terminal device does not monitor the PDCCH from an end moment of on-duration in the DRX cycle of the second carrier. In this case, the second time period is from the end moment of the on-duration to an end moment of the first timer, as shown by a gray region in the DRX cycle in FIG. 9. It can be learned that the PDCCH is monitored only in on-duration on the second carrier, and a manner of monitoring the PDCCH on the second carrier may be used for the carrier other than the first carrier in the plurality of carriers in the DRX cycle. In this way, PDCCH monitoring performed by the terminal device on a remaining carrier is reduced, thereby reducing power consumption of the terminal device.

Then, as shown in FIG. 9, if the terminal device successfully receives the control information at a moment T92 in on-duration of the second carrier, the terminal device starts the first timers at both the moment T92 on the first carrier and the moment T92 on the second carrier, the terminal device monitors the PDCCH on the first carrier in a time period of the first timer that is started at the moment T92, and the terminal device does not monitor the PDCCH on the first carrier from an end moment of the on-duration in the DRX cycle. Then, if the terminal device successfully receives the control information at a moment T93 on the second carrier, the terminal device restarts the first timer at a moment T93 on the first carrier and the moment T93 on the second carrier, the terminal device monitors the PDCCH in a time period of the first timer started at the moment T93 on the second carrier, and the terminal device does not monitor the PDCCH on the first carrier from the end moment of the on-duration in the DRX cycle. In this case, the second time period is from the end moment of the on-duration to an end moment of the first timer restarted at the moment T93, as shown by a gray region in the DRX cycle in FIG. 9. It can be learned that the terminal device monitors the PDCCH only in the on-duration on the first carrier, and a manner of monitoring the PDCCH on the first carrier may be used for a carrier other than the second carrier in the plurality of carriers. In this way, duration of monitoring the PDCCH performed by the terminal device on the remaining carrier is reduced, thereby reducing power consumption of the terminal device.

Optionally, the first carrier and the second carrier in FIG. 9 are not distinguished as a primary component carrier or a secondary component carrier.

In the possible implementation solution described in 1, when the control information has been received on the first carrier, the terminal device monitors the PDCCH only on the first carrier in the second time period, and the terminal device does not monitor the PDCCH on the carrier other than the first carrier in the second time period. In this way, duration of monitoring the PDCCH performed by the terminal device on the remaining carrier is reduced, thereby reducing power consumption of the terminal device.

With reference to the solution described in the wireless communication method 1 in FIG. 8, the terminal device monitors the PDCCH in DRX on duration of all carriers. If the terminal device has received the control information in DRX on duration of a carrier or in an inactivity timer on a carrier, inactivity timers are started or restarted on all carriers, but the terminal device monitors the PDCCH only in the inactivity timer on a carrier on which the control information has been received, and on a carrier on which no control information has been received in on duration or in the inactivity timer, the terminal device only starts or restarts the inactivity timer, but does not monitor the PDCCH. In an existing solution, the terminal device monitors the PDCCH in the DRX on duration of all carriers, starts or restarts the inactivity timers on all carriers after the control information has been received in DRX on duration of any carrier or in an inactivity timer on any carrier, and monitors the PDCCH in the inactivity timers on all carriers. It can be learned that in the solution in this embodiment of this application, the PDCCH is not monitored in a DRX-inactivity timer on a carrier on which no control information has been not received in on duration or in an inactivity timer, thereby reducing power consumption of monitoring the PDCCH by the terminal device.

2. In a possible implementation solution, when the terminal device has received the control information in the first time period of the first carrier, the terminal device starts or restarts the first timer on the first carrier, and does not start or restart the first timer on the carrier other than the first carrier. The first timer is used to monitor the PDCCH. When the first timer is started or restarted, the terminal device starts to monitor the PDCCH. In this way, after the first timer is started or restarted, the terminal device monitors the PDCCH only on the first carrier in the second time period, and does not monitor the PDCCH on the carrier other than the first carrier.

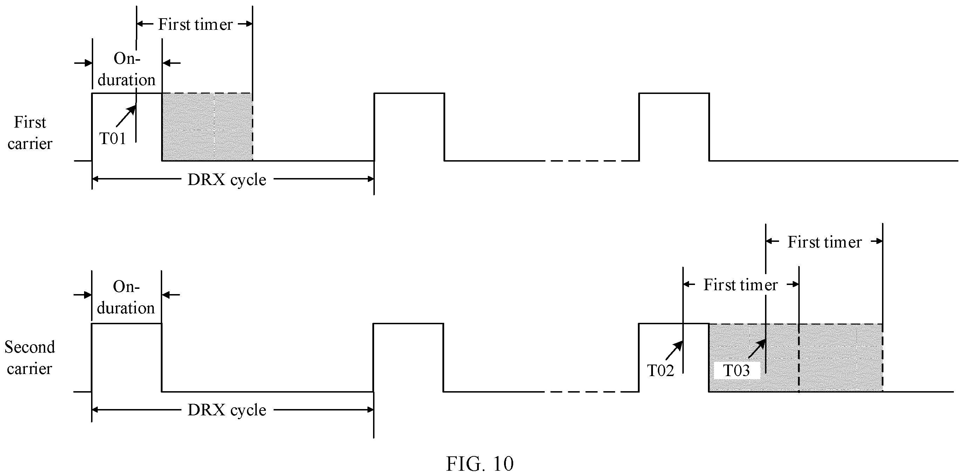

FIG. 10 is an example diagram of DRX cycles of different carriers according to an embodiment of this application. As shown in FIG. 10, discontinuous reception is performed on both the first carrier and a second carrier by using DRX cycles, and each of the first carrier and the second carrier is any one of the plurality of carriers.

As shown in FIG. 10, the terminal device successfully receives the control information at a moment T01 in on-duration of the first carrier, and the terminal device starts the first timer at the moment T01 of the first carrier. Then, the terminal device monitors the PDCCH in a time period of the first timer on the first carrier, and the terminal device does not monitor the PDCCH from an end moment of on-duration in the DRX cycle of the second carrier. In this case, the second time period is from the end moment of the on-duration to an end moment of the first timer, as shown by a gray region in the DRX cycle in FIG. 10. It can be learned that the PDCCH is monitored only in the on-duration on the second carrier, and a manner of monitoring the PDCCH on the second carrier may be used for the carrier other than the first carrier in the plurality of carriers in the DRX cycle. In this way, duration of monitoring the PDCCH performed by the terminal device on the remaining carrier is reduced, thereby reducing power consumption of the terminal device.

Then, as shown in FIG. 10, if the terminal device successfully receives the control information at a moment T02 in on-duration of the second carrier, the terminal device starts the first timer at the moment T02 on the second carrier, the terminal device monitors the PDCCH in a time period of the first timer started at the moment T01 on the second carrier, and the terminal device does not monitor the PDCCH on the first carrier from an end moment of the on-duration in the DRX cycle. Then, if the terminal device successfully receives the control information at a moment T03 on the second carrier, the terminal device restarts the first timer at the moment T03 on the second carrier, the terminal device monitors the PDCCH in a time period of the first timer started at the moment T03 on the second carrier, and the terminal device does not monitor the PDCCH on the first carrier from an end moment of the on-duration in the DRX cycle. In this case, the second time period is from the end moment of the on-duration to an end moment of the first timer restarted at the moment T03, as shown by a gray region in the DRX cycle in FIG. 10. It can be learned that the terminal device monitors the PDCCH on the first carrier only in the on-duration, and a manner of monitoring the PDCCH may be used for the carrier other than the second carrier in the plurality of carriers in the DRX cycle. In this way, duration of monitoring the PDCCH performed by the terminal device on the remaining carrier is reduced, thereby reducing power consumption of the terminal device.

In the possible implementation solution described in 2, when the control information has been received on the first carrier, the terminal device monitors the PDCCH only on the first carrier in the second time period, and the terminal device does not monitor the PDCCH on the carrier other than the first carrier in the second time period. In this way, duration of monitoring the PDCCH performed by the terminal device on the remaining carrier is reduced, thereby reducing power consumption of the terminal device.

With reference to the solution in the wireless communication method 2 in FIG. 8, the terminal device monitors the PDCCH in DRX on duration of all carriers, but the terminal device starts or restarts an inactivity timer only on a carrier on which the control information has been received in DRX on duration or in the inactivity timer, and monitors the PDCCH in the inactivity timer. The terminal device does not start an inactivity timer or monitor the PDCCH on a carrier on which no control information has been received in DRX on duration or in the inactivity timer. In an existing solution, the terminal device monitors the PDCCH in C-DRX on duration of all carriers, starts inactivity timers on all carriers after the control information has been received in C-DRX on duration of any carrier or in an inactivity timer on any carrier, and monitors the PDCCH in the inactivity timers on all carriers. It can be learned that in the solution in this embodiment of this application, a DRX-inactivity timer is started or restarted only on a carrier on which the control information has been received in C-DRX on duration or in the inactivity timer, and the PDCCH is monitored in the DRX-inactivity timer, and on a carrier on which no control information has been received in the on duration or the inactivity timer, the DRX-inactivity timer is not started or restarted, and the PDCCH is not monitored, thereby reducing power consumption of monitoring the PDCCH by the terminal device.

With reference to the solutions described in the embodiments in FIG. 3 to FIG. 8, in a possible implementation solution, when the terminal device has received the control information in the DRX on duration of the first carrier or in the inactivity timer on the first carrier, the inactivity timers are started or restarted on all carriers, but the PDCCH is not monitored in the started or restarted inactivity timer on a carrier on which no control information has been received in on duration or in the inactivity timer.

In another possible implementation solution, when the terminal device has received the control information in the DRX on duration of the first carrier or in the inactivity timer on the first carrier, an inactivity time is started or restarted and the PDCCH is monitored only on a carrier on which the control information has been received, and no inactivity timer is started or the PDCCH is not monitored on a carrier on which no control information has been received in on duration or in the inactivity timer.

In another possible implementation solution, when two cycles, namely, a DRX-long cycle and a DRX-short cycle, are configured, when a DRX-inactivity timer of the terminal device in a DRX-long cycle of a carrier expires or the terminal device has received the control information in on duration of a DRX-long cycle, the terminal device changes a next cycle of the carrier from the DRX-long cycle to the DRX-short cycle, and keeps a DRX-cycle of the remaining carrier unchanged.

In another possible implementation solution, when two cycles, namely, a DRX-long cycle and a DRX-short cycle, are configured, a PCell is kept unchanged, and for an SCell, the terminal device needs to receive N PDCCHs in one DRX-long cycle, where N>1. To be specific, if a quantity of pieces of control information that has been received by the terminal device in the DRX-long cycle is greater than or equal to N, a next cycle of the SCell is changed to the DRX-short cycle.

In another possible implementation solution, when two cycles, namely, a DRX-long cycle and a DRX-short cycle, are configured, two different sets of DRX-long cycle timer values are configured for a PCell and an SCell. Optionally, DRX-long cycle timer values of different SCells may be the same or different.

In another possible implementation solution, when two cycles, namely, a DRX-long cycle and a DRX-short cycle, are configured, two different groups of DRX-short cycle timer values are configured for a PCell and an SCell. Optionally, DRX-short cycle timer values of different SCells may be the same or may be different. In another possible implementation solution, when two cycles, namely, a DRX-long cycle and a DRX-short cycle, are configured, two different groups of DRX-on durationTimer values are configured for a PCell and an SCell, DRX cycle lengths are the same, cycle frequencies are the same, a start position of on duration of the PCell is aligned with a start position of on duration of the SCell. Optionally, DRX-on durationTimer values of different SCells may be the same or may be different.

In all the foregoing possible implementation solutions, power consumption of monitoring the PDCCH by the terminal device can be reduced.

The foregoing mainly describes, from a perspective of the method, the solutions provided in the embodiments of this application. It may be understood that to implement the foregoing functions, the terminal device includes corresponding hardware structures and/or software modules for performing the functions. With reference to the units and algorithm steps described in the embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, the terminal device may be divided into functional modules or functional units based on the foregoing method examples. For example, each functional module or functional unit may be obtained through division based on each corresponding function, or two or more functions may be integrated into one processing module or processing unit. The integrated modules or units may be implemented in a form of hardware, or may be implemented in a form of a software functional unit. It should be noted that, in this embodiment of this application, the module and unit division is an example, and is merely logical function division. During actual implementation, another division manner may be used.

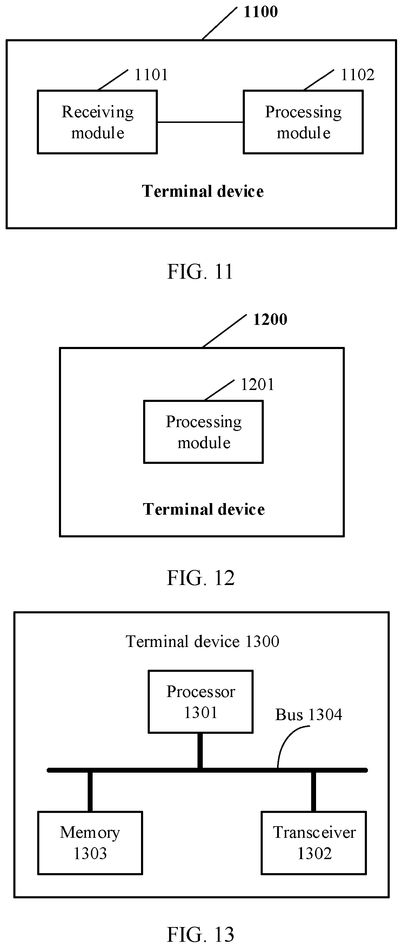

FIG. 11 is a schematic structural diagram of a terminal device according to an embodiment of this application. The terminal device is configured to implement the method embodiments in FIG. 3 to FIG. 7. As shown in FIG. 11, the terminal device 1100 includes a receiving module 1101 and a processing module 1102. At least two discontinuous reception DRX cycles are configured for the terminal device 1100, the at least two DRX cycles include a first DRX cycle and a second DRX cycle, and the first DRX cycle and the second DRX cycle have different cycle lengths.

The receiving module 1101 is configured to perform discontinuous reception on a first carrier based on the first DRX cycle, where the first carrier is any one of a plurality of carriers.

The processing module 1102 is configured to: if the first carrier meets a first condition, change a next DRX cycle of the first carrier from the first DRX cycle to the second DRX cycle, and keep a DRX cycle of a remaining carrier unchanged.

The first condition includes:
the receiving module 1101 has received control information on the first carrier;
the processing module 1102 detects that a first timer on the first carrier expires; or
a quantity of pieces of control information that has been received by the receiving module 1101 in a first time period of the first carrier is greater than or equal to a preset value.

Optionally, when the first condition is that the receiving module 1101 has received the control information on the first carrier, or that the processing module 1102 detects that the first timer on the first carrier expires, the length of the first DRX cycle is greater than the length of the second DRX cycle, where that the first timer expires means that the terminal device has not received the control information in a time period of the started or restarted first timer.

Optionally, when the first condition is that the processing module 1102 detects that the first timer on the first carrier expires, the length of the first DRX cycle is greater than the length of the second DRX cycle, where that the first timer expires means that the terminal device has received the control information in each first DRX cycle in a time period corresponding to the first timer.

In a possible implementation solution, values of first timers corresponding to different carriers in the plurality of carriers are not completely the same, and the plurality of carriers include a primary component carrier and a secondary component carrier.

A value of a first timer corresponding to the primary component carrier is less than or equal to a value of a first timer corresponding to the secondary component carrier.

The value of the first timer is a quantity of first DRX cycles included in the time period corresponding to the first timer.

In a possible implementation solution, the processing module 1102 is further configured to start or restart the first timer when a second condition is met.

The second condition includes:
the receiving module 1101 has not received the control information in the first DRX cycle of the first carrier; or
the processing module 1102 detects that a second timer on the first carrier expires, where that the second timer expires means that the terminal device has not received the control information in a time period corresponding to the second timer.

Optionally, when the first condition is that the processing module 1102 detects that the first timer on the first carrier expires, the length of the second DRX cycle is greater than the length of the first DRX cycle, where that the first timer expires means that the terminal device has not received the control information in a time period corresponding to the first timer.

In a possible implementation solution, values of first timers corresponding to different carriers in the plurality of carriers are not completely the same, and the plurality of carriers include a primary component carrier and a secondary component carrier.

A value of a first timer corresponding to the primary component carrier is greater than or equal to a value of a first timer corresponding to the secondary component carrier.

The value of the first timer is a quantity of second DRX cycles included in a time period corresponding to the first timer.

In a possible implementation solution, the processing module 1102 is further configured to start or restart the first timer when a third condition is met.

The third condition includes:
the receiving module 1101 has received the control information in the first DRX cycle of the first carrier;
the processing module 1102 detects that a third timer expires in the first DRX cycle of the first carrier, where that the third timer expires means that the terminal device has not received the control information in a time period corresponding to the third timer; or
the processing module 1102 detects that a fourth timer on the first carrier expires, where that the fourth timer expires means that the terminal device has received the control information in each second DRX cycle in a time period corresponding to the fourth timer.

Optionally, the value of the first timer is configured by using radio resource control RRC signaling.

Optionally, when the first condition is that the quantity of pieces of the control information that has been received by the processing module 1102 in the first time period is greater than a preset value, the length of the first DRX cycle is greater than the length of the second DRX cycle. The first time period is duration corresponding to the first DRX cycle, the preset value is k, and k is a positive integer.

In a possible implementation solution, preset values corresponding to different carriers in the plurality of carriers are not completely the same, and the plurality of carriers include a primary component carrier and a secondary component carrier.

A preset value corresponding to the primary component carrier is less than or equal to a preset value corresponding to the secondary component carrier.

In a possible implementation solution, the preset value is configured by using RRC signaling.

Optionally, the DRX cycle includes on-duration (on-duration), and the plurality of carriers include the primary component carrier and the secondary component carrier. In a same DRX cycle, an on-duration length corresponding to the primary component carrier is greater than an on-duration length corresponding to the secondary component carrier.

It may be understood that the terminal device 1100 is configured to implement the steps performed by the terminal device in the embodiments shown in FIG. 3 to FIG. 7. For a specific implementation of the functional blocks included in the terminal device in FIG. 11 and corresponding beneficial effects, refer to the specific descriptions of the embodiments in FIG. 3 to FIG. 7. Details are not described herein again.

In this embodiment of this application, the receiving module may be a receiver or a receiver circuit. Alternatively, the receiving module may be a communications interface of the terminal device.

FIG. 12 is a schematic structural diagram of another terminal device according to an embodiment of this application. The terminal device is configured to implement the embodiments in FIG. 8 to FIG. 10. As shown in FIG. 12, the terminal device 1200 includes a processing module 1201.

The processing module 1201 is configured to monitor a physical downlink control channel PDCCH in a first time period of a first carrier, where the first carrier is any one of a plurality of carriers.

The processing module 1201 is further configured to: when control information has been received in the first time period of the first carrier, monitor the PDCCH only on the first carrier in a second time period.

Optionally, the processing module 1201 is further configured to skip monitoring, by the terminal device, the PDCCH on a carrier other than the first carrier in the second time period.

Optionally, the second time period does not overlap the first time period.

Optionally, the processing module 1201 is further configured to: when the control information has been received in the first time period of the first carrier, start or restart a first timer on the first carrier and skip starting or restarting the first timer on a carrier other than the first carrier, where
the first timer is configured to monitor the PDCCH.

Optionally, the processing module 1201 is further configured to: when the control information has been received in the first time period of the first carrier, start or restart first timers on the plurality of carriers, and skip, by the terminal device, monitoring the PDCCH on the carrier other than the first carrier after the first timers are started or restarted.

Optionally, the terminal device is applied to an NR communications system.

It can be understood that, for a specific implementation and a corresponding beneficial effect of the function blocks included in the terminal device in FIG. 12, refer to the specific descriptions in the embodiments in FIG. 8 to FIG. 10. Details are not described herein again.

In this embodiment of this application, a function implemented by the processing module 1201 may be implemented by a combination of a processor and a transceiver. The transceiver is a communications interface of the terminal device.

The terminal device in the embodiments shown in FIG. 11 and FIG. 12 may be implemented by the terminal device 1300 shown in FIG. 13. FIG. 13 is a schematic structural diagram of another terminal device according to an embodiment of this application. The terminal device 1300 shown in FIG. 13 includes the processor 1301 and the transceiver 1302.

The transceiver 1302 is configured to support information transmission between the terminal device 1300 and the access network device or another device in the foregoing embodiments, where an example is to implement the process 301 in the embodiment shown in FIG. 3.

The processor 1301 is configured to control and manage an action of the terminal device. For example, the processing unit 1301 is configured to support the terminal device 1300 in performing the process 302 in FIG. 3, and the processes 801 and 802 in FIG. 8.

The processor 1301 and the transceiver 1302 are communicatively connected. For example, they are connected by using the bus 1304. The bus 1304 may be a PCI bus, an EISA bus, or the like. The bus 1304 may be classified into an address bus, a data bus, a control bus, and the like. For ease of representation, only one thick line is used to represent the bus in FIG. 13, but this does not mean that there is only one bus or only one type of bus.

The terminal device 1300 may further include a memory 1303. The memory 1303 is configured to store program code and data that are executed by the terminal device 1300. The processor 1301 is configured to execute the application program code stored in the memory 1303, to implement an action of the terminal device provided in any one of the embodiments shown in FIG. 3 to FIG. 10.

It should be noted that, in actual application, the terminal device may include one or more processors, and a structure of the terminal device 1300 does not constitute a limitation on this embodiment of this application.

The processor 1301 may be a central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA) or another programmable logical device, a transistor logical device, a hardware component, or any combination thereof. The processor may implement or execute various example logical blocks, modules, and circuits described with reference to content disclosed in this application. The processor may be a combination of processors implementing a computing function, for example, a combination of one or more microprocessors, or a combination of a DSP and a microprocessor.

The transceiver 1304 may be a communications interface, a transceiver circuit, or the like. The transceiver is a general term. During specific implementation, the transceiver may include a plurality of interfaces.

The memory 1303 may include a volatile memory (volatile memory), for example, a random access memory (random access memory, RAM). The memory 1303 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 1303 may further include a combination of the foregoing types of memories.

An embodiment of this application further provides a computer storage medium, which may be configured to store computer software instructions used by the terminal device in the embodiment shown in FIG. 13. The computer software instructions include a program designed for the terminal device to execute the foregoing embodiments. The storage medium includes but is not limited to a flash memory, a hard disk, or a solid-state drive.

An embodiment of this application further provides a computer program product. When the computer product runs on a computing device, the wireless communication method designed for the terminal device in the embodiment shown in FIG. 13 can be performed.

In the specification, claims, and accompanying drawings of this application, terms such as "first", "second", "third", and "fourth" are intended to distinguish between different objects but do not indicate a particular order. In addition, terms such as "including", "having", or any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may be a magnetic disk, an optical disc, a read-only memory (Read-Only Memory, ROM), or a random access memory (Random Access Memory, RAM).

## Claims

1. A wireless communication method, implemented by a terminal device, comprising:
configuring at least two discontinuous reception, DRX, cycles, wherein the at least two DRX cycles comprise a first DRX cycle and a second DRX cycle, and a cycle length of the first DRX cycle is longer than a cycle length of the second DRX cycle;
if the first DRX cycle is used for performing discontinuous reception on a first carrier and if a drx-Inactivity Timer for the first carrier expires, performing discontinuous reception on the first carrier by using the second DRX cycle instead of the first DRX cycle, and remaining a DRX cycle which is used for discontinuous reception on a second carrier unchanged;
if the second DRX cycle is used for performing discontinuous reception on the first carrier and if a drx-Short Cycle Timer for the first carrier expires, performing discontinuous reception on the first carrier by using the first DRX cycle instead of the second DRX cycle, and remaining the DRX cycle which is used for discontinuous reception on the second carrier unchanged;
wherein the first carrier is different from the second carrier.

2. The method according to claim 1, wherein the method comprises performing the discontinuous reception on the first carrier by using the second DRX cycle instead of the first DRX cycle from a next cycle if the drx-Inactivity Timer for the first carrier expires.

3. The method according to claim 1 or 2, wherein the method comprises performing the discontinuous reception on the first carrier by using the first DRX cycle instead of the second DRX cycle from a next cycle if the drx-Short Cycle Timer for the first carrier expires.

4. The method according to any one of claims 1 to 3, wherein the method further comprises:
if the drx-Inactivity Timer for the first carrier expires,
starting or restarting the drx-Short Cycle Timer for the first carrier, and,
not starting or not restarting a drx-Short Cycle Timer for the second carrier.

5. The method according to any one of claims 1 to 4, wherein the drx-Inactivity Timer is configured to indicate a time duration started from detecting control information by the terminal device through monitoring on a physical downlink control channel.

6. The method according to any one of claims 1 to 5, wherein the drx-Short Cycle Timer is configured to indicate a time duration of a short DRX cycle used by the terminal device.

7. The method according to any one of claims 1 to 6, wherein a value of the drx-Inactivity Timers is configured by radio resource control, RRC, signaling; and
a value of the drx-Short Cycle Timers is configured by the RRC signaling.

8. The method according to any one of claims 1 to 7, wherein the first carrier is one of a plurality of carriers, the second carrier is another one of the plurality of carriers.

9. The method according to claim 8, wherein the DRX cycle comprises on-duration, and the plurality of carriers comprise a primary carrier and a secondary carrier; and an on-duration length corresponding to the primary carrier is greater than an on-duration length corresponding to the secondary carrier.

10. The method according to any one of claims 1 to 9, further comprising:
monitoring a physical downlink control channel, PDCCH, in a first time period of the first carrier; and
if the terminal device receives the control information within the first time period of the first carrier,
starting or restarting the drx-Inactivity Timer of the first carrier, and
not starting or not restarting a drx-Inactivity Timer of the second carrier.

11. A computer-readable storage medium, comprising an instruction, wherein when the instruction is run on a computer, the computer is enabled to perform the method according to any one of claims 1 to 10.

12. A terminal device (1300), comprising a memory (1303), a processor (1301), and a computer program that is stored in the memory and can be run on the processor (1301), wherein the processor (1301) executes the program to implement the method according to any one of claims 1 to 10.

## Patentansprüche

1. Drahtloses Kommunikationsverfahren, implementiert durch eine Endgerätvorrichtung, umfassend:
Konfigurieren von mindestens zwei Zyklen von diskontinuierlichem Empfang, DRX, wobei die mindestens zwei DRX-Zyklen einen ersten DRX-Zyklus und einen zweiten DRX-Zyklus umfassen und eine Zykluslänge des ersten DRX-Zyklus länger als eine Zykluslänge des zweiten DRX-Zyklus ist;
wenn der erste DRX-Zyklus zum Durchführen von diskontinuierlichem Empfang auf einem ersten Träger verwendet wird und wenn ein drx-Inaktivitätszeitgeber für den ersten Träger abläuft, Durchführen von diskontinuierlichem Empfang auf dem ersten Träger durch Verwendung des zweiten DRX-Zyklus anstelle des ersten DRX-Zyklus, und Verbleiben eines DRX-Zyklus, der für diskontinuierlichen Empfang auf einem zweiten Träger unverändert verwendet wird;
wenn der zweite DRX-Zyklus zum Durchführen von diskontinuierlichem Empfang auf dem ersten Träger verwendet wird und wenn ein drx-Kurzzykluszeitgeber für den ersten Träger abläuft, Durchführen von diskontinuierlichem Empfang auf dem ersten Träger durch Verwendung des ersten DRX-Zyklus anstelle des zweiten DRX-Zyklus, und Verbleiben des DRX-Zyklus, der für diskontinuierlichen Empfang auf dem zweiten Träger unverändert verwendet wird;
wobei der erste Träger von dem zweiten Träger verschieden ist.

2. Verfahren nach Anspruch 1, wobei das Verfahren Durchführen des diskontinuierlichen Empfangs auf dem ersten Träger durch Verwendung des zweiten DRX-Zyklus anstelle des ersten DRX-Zyklus ab einem nächsten Zyklus umfasst, wenn der drx-Inaktivitätszeitgeber für den ersten Träger abläuft.

3. Verfahren nach Anspruch 1 oder 2, wobei das Verfahren Durchführen des diskontinuierlichen Empfangs auf dem ersten Träger durch Verwendung des ersten DRX-Zyklus anstelle des zweiten DRX-Zyklus ab einem nächsten Zyklus umfasst, wenn der drx-Kurzzykluszeitgeber für den ersten Träger abläuft.

4. Verfahren nach einem der Ansprüche 1 bis 3, wobei das Verfahren ferner umfasst:
wenn der drx-Inaktivitätszeitgeber für den ersten Träger abläuft,
Starten oder Neustarten des drx-Kurzzykluszeitgeber für den ersten Träger und
nicht Starten oder nicht Neustarten eines drx-Kurzzykluszeitgeber für den zweiten Träger.

5. Verfahren nach einem der Ansprüche 1 bis 4, wobei der drx-Inaktivitätszeitgeber konfiguriert ist, eine Zeitdauer beginnend vom Detektieren von Steuerinformationen durch die Endgerätvorrichtung durch Überwachen in einem physikalischen Abwärtsstrecken-Steuerkanal anzugeben.

6. Verfahren nach einem der Ansprüche 1 bis 5, wobei der drx-Kurzzykluszeitgeber konfiguriert ist, eine Zeitdauer eines kurzen DRX-Zyklus, der durch die Endgerätvorrichtung verwendet wird, anzugeben.

7. Verfahren nach einem der Ansprüche 1 bis 6, wobei ein Wert des drx-Inaktivitätszeitgebers durch Funkbetriebsmittelsteuerungs- bzw. RRC-Signalisierung konfiguriert wird; und
ein Wert des drx-Kurzzykluszeitgebers durch die RRC-Signalisierung konfiguriert wird.

8. Verfahren nach einem der Ansprüche 1 bis 7, wobei der erste Träger einer einer Vielzahl von Trägern ist, der zweite Träger ein anderer der Vielzahl von Trägern ist.

9. Verfahren nach Anspruch 8, wobei der DRX-Zyklus eine Einschaltdauer umfasst und die Vielzahl von Trägern einen primären Träger und einen sekundären Träger umfasst; und eine Einschaltdauerlänge korrespondierend mit dem primären Träger größer als eine Einschaltdauerlänge korrespondierend mit dem sekundären Träger ist.

10. Verfahren nach einem der Ansprüche 1 bis 9, ferner umfassend:
Überwachen eines physikalischen Abwärtsstrecken-Steuerkanals, PDCCH, in einer ersten Zeitperiode des ersten Trägers; und
wenn die Endgerätvorrichtung die Steuerinformationen in der ersten Zeitperiode des ersten Trägers empfängt,
Starten oder Neustarten des drx-Inaktivitätszeitgeber des ersten Trägers und
nicht Starten oder nicht Neustarten eines drx-Inaktivitätszeitgebers des zweiten Trägers.

11. Computerlesbares Speichermedium, umfassend eine Anweisung, wobei, wenn die Anweisung auf einem Computer ausgeführt wird, der Computer in die Lage versetzt wird, das Verfahren nach einem der Ansprüche 1 bis 10 durchzuführen.

12. Endgerätvorrichtung (1300), umfassend einen Speicher (1303), einen Prozessor (1301) und ein Computerprogramm, das in dem Speicher gespeichert ist und in dem Prozessor (1301) ausgeführt werden kann, wobei der Prozessor (1301) das Programm ausführt, um das Verfahren nach einem der Ansprüche 1 bis 10 zu implementieren.

## Revendications

1. Procédé de communication sans fil, mis en oeuvre par un dispositif terminal, comportant les étapes consistant à :
configurer au moins deux cycles de réception discontinue, DRX, lesdits au moins deux cycles de DRX comportant un premier cycle de DRX et un second cycle de DRX, et une longueur de cycle du premier cycle de DRX étant plus longue qu'une longueur de cycle du second cycle de DRX ;
si le premier cycle de DRX est utilisé pour effectuer une réception discontinue sur une première porteuse et si un temporisateur d'inactivité de DRX pour la première porteuse expire, effectuer une réception discontinue sur la première porteuse en utilisant le second cycle de DRX au lieu du premier cycle de DRX, et maintenir inchangé un cycle de DRX qui est utilisé pour une réception discontinue sur une seconde porteuse ;
si le second cycle de DRX est utilisé pour effectuer une réception discontinue sur la première porteuse et si un temporisateur de cycle court de DRX pour la première porteuse expire, effectuer une réception discontinue sur la première porteuse en utilisant le premier cycle de DRX au lieu du second cycle de DRX, et maintenir inchangé le cycle de DRX qui est utilisé pour une réception discontinue sur la seconde porteuse ;
la première porteuse étant différente de la seconde porteuse.

2. Procédé selon la revendication 1, le procédé comportant le fait d'effectuer la réception discontinue sur la première porteuse en utilisant le second cycle de DRX au lieu du premier cycle de DRX à partir d'un cycle suivant si le temporisateur d'inactivité de DRX pour la première porteuse expire.

3. Procédé selon la revendication 1 ou 2, le procédé comportant le fait d'effectuer la réception discontinue sur la première porteuse en utilisant le premier cycle de DRX au lieu du second cycle de DRX à partir d'un cycle suivant si le temporisateur de cycle court de DRX pour la première porteuse expire.

4. Procédé selon l'une quelconque des revendications 1 à 3, le procédé comportant en outre :
si le temporisateur d'inactivité de DRX pour la première porteuse expire,
le fait de démarrer ou de redémarrer le temporisateur de cycle court de DRX pour la première porteuse, et
le fait de ne pas démarrer ou de ne pas redémarrer un temporisateur de cycle court de DRX pour la seconde porteuse.

5. Procédé selon l'une quelconque des revendications 1 à 4, le temporisateur d'inactivité de DRX étant configuré pour indiquer une durée commençant lors de la détection d'informations de commande par le dispositif terminal à travers une surveillance sur un canal physique de commande de liaison descendante.

6. Procédé selon l'une quelconque des revendications 1 à 5, le temporisateur de cycle court de DRX étant configuré pour indiquer une durée d'un cycle court de DRX utilisé par le dispositif terminal.

7. Procédé selon l'une quelconque des revendications 1 à 6, une valeur des temporisateurs d'inactivité de DRX étant configurée par une signalisation de gestion des ressources radioélectriques, RRC ; et
une valeur des temporisateurs de cycle court de DRX étant configurée par la signalisation de RRC.

8. Procédé selon l'une quelconque des revendications 1 à 7, la première porteuse étant une porteuse d'une pluralité de porteuses, la seconde porteuse étant une autre porteuse de la pluralité de porteuses.

9. Procédé selon la revendication 8, le cycle de DRX comportant une durée de marche, et la pluralité de porteuses comportant une porteuse primaire et une porteuse secondaire ; et une longueur de durée de marche qui correspond à la porteuse primaire étant supérieure à une longueur de durée de marche qui correspond à la porteuse secondaire.

10. Procédé selon l'une quelconque des revendications 1 à 9, comportant en outre les étapes consistant à :
surveiller un canal physique de commande de liaison descendante, PDCCH, au cours d'une première période de la première porteuse ; et
si le dispositif terminal reçoit les informations de commande au cours de la première période de la première porteuse,
démarrer ou redémarrer le temporisateur d'inactivité de DRX de la première porteuse, et
ne pas démarrer ou ne pas redémarrer un temporisateur d'inactivité de DRX de la seconde porteuse.

11. Support de stockage lisible par ordinateur, comportant une instruction, un ordinateur étant rendu apte, lorsque l'instruction est exécutée sur l'ordinateur, à réaliser le procédé selon l'une quelconque des revendications 1 à 10.

12. Dispositif terminal (1300), comportant une mémoire (1303), un processeur (1301), et un programme d'ordinateur qui est stocké dans la mémoire et peut être exécuté sur le processeur (1301), le processeur (1301) exécutant le programme pour mettre en oeuvre le procédé selon l'une quelconque des revendications 1 à 10.
